# EUROPÄISCHE PATENTSCHRIFT

(11) **EP 0 645 565 B1**
(45) Veröffentlichungstag und Bekanntmachung des Hinweises auf die Patenterteilung: **19.03.1997**
(21) Anmeldenummer: 94111092.6
(22) Anmeldetag: 16.07.1994
(51) Int. Cl.: F16K 5/06, F16K 27/06

(54) **Absperrorgan**
Shut-off valve
Soupage d'arrêt

(30) Priorität: 21.09.1993 DE 4331968
(43) Veröffentlichungstag der Anmeldung: 29.03.1995
(73) Patentinhaber: Duriron GmbH, 48683 Ahaus (DE)
(72) Erfinder: Helmich, Anton, D-48619 Heek (DE); Buss, Werner, D-48683 Ahaus (DE)
(74) Vertreter: Habbel, Hans-Georg, Dipl.-Ing.

(56) Entgegenhaltungen:
- CA-A- 647 005
- DE-U- 9 212 452

## Beschreibung

Die Erfindung bezieht sich auf ein Absperrorgan gemäß dem Oberbegriff des Hauptanspruches.

Aus dem DE-GM 19 48 579 ist es bekannt, das Innere vom Absperrorgan, insbesondere von Kugelhähnen, mit einer Auskleidung aus Kunststoff zu versehen, um derart aggressive Medien in im übrigen aus Metall bestehenden Armaturen führen zu können. Aus dem genannten Gebrauchsmuster ist es weiterhin bekannt, die beiden zusammenwirkenden Flanschflächen von Gehäuse und Anschlußstutzen mit einer Auskleidung zu versehen, so daß im Bereich dieser beiden Anschlußflächen zwei Kunststoffschichten abdichtend einanderliegen.

Da der Anschlußstutzen an das Gehäuse aus Dichtigkeitsgründen verhältnismäßig stark angeschraubt wird, werden die Kunststoffschichten im Bereich dieser Flanschflächen sehr stark gepreßt, so daß sie fließen. Hierdurch ist die Stellung des Anschlußstutzens nicht genügend definiert, und man hat bereits vorgeschlagen, die zusammenarbeitenden Flanschflächen nicht vollständig mit Kunststoff zu überziehen, sondern einen Bereich der Flanschflächen metallisch aufeinander zur Auflage zu bringen.

Trotz dieser Ausbildung ist das Abdichtproblem im Bereich der Flanschflächen bisher nicht ausreichend gelöst.

Auch die den DE-A-22 39 314 und US-A-19 81 825 entnehmbare Lehre, Vorsprünge des einen Bauteiles in Nuten des anderen Bauteiles eingreifen zu lassen, löst das Abdichtproblem bei mit Auskleidungen aus Kunststoff versehenen Absperrorganen nicht, da die in Abhängigkeit des Druckes und der Temperatur bedingten Fließbewegungen des Kunststoffes hierdurch nicht beherrscht werden können. So ist bei der Einrichtung gemäß der US-A-19 81 825 der anzuschließende Flansch nicht mit einer Kunststoffauskleidung versehen und bei der Einrichtung gemäß der DE-A-22 39 314 sind Kunststoffauskleidungen nur im Tiefsten der Nuten der ineinander eingreifenden Nut- und Federanordnungen angeordnet.

Auch die in der DE-A-41 17 714 gezeigte Ausbildung, nämlich daß sich ein ringförmiger Wulst der Auskleidung im abgedichteten Zustand in die widerstandsfähige Schicht der Auskleidung des anliegenden Flansches eindrückt, reicht zur Abdichtung nicht aus, da nicht sichergestellt ist, in welcher Richtung sich der Wulst plattdrückt, insbesondere dann, wenn hohe Temperaturen herrschen.

In der CA-A-647 005 wird eine Armatur vorgeschlagen, die mit einer Kunststoffauskleidung ausgerüstet ist, wobei die aneinander zur Anlage kommenden Flächen der Auskleidung mit ringförmigen, in radialer Richtung dreieckförmigen Vorsprüngen und die andere Auskleidung mit ringförmigen, in radialer Richtung dreieckförmigen Nuten ausgerüstet sind. Diese einfachen Vorsprünge und Nuten sind aber nicht in der Lage, bei hohen Drücken die erforderliche Abdichtung zu erbringen und es könnte sogar sein, daß diese Abdichtung schlechter ist als die sich in das Material der gegenüberliegenden Dichtmasse einpressenden Vorsprünge gemäß der DE-A-41 17 714.

Der Erfindung liegt die Aufgabe zugrunde, die Abdichtflächen eines Anschlußstutzens gegenüber dem übrigen Gehäuse eines Absperrorganes so auszubilden, daß trotz wechselnder Druck- und Temperaturverhältnisse innerhalb der Armatur die Abdichtung ausreichend aufrechterhalten wird, gleichzeitig aber eine exakte Lage der beiden aneinander anzuschließenden Bauteile garantiert wird.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt, wird vorgeschlagen, daß die aneinander zur Anlage kommenden Kunststoffauskleidungen der Flanschflächen je mit wenigstens einem vorstehenden, mit der Kunststoffauskleidung materialeinheitlichen Dichtring ausgerüstet sind, der in radialer Richtung fingerartig in eine zugeordnete Aufnahmenut der anderen Auskleidung der Flanschfläche eingreift. Die Länge dieses Dichtringes kann dabei größer sein als die übrige Stärke der Auskleidung, so daß dadurch ein langer Dichtweg erzielt wird. Diese Art der Abdichtung hat den Vorteil, daß selbst dann, wenn in dem Bereich der Dichtringe eine Leckage auftritt, der dann im Bereich des Dichtringes auftretende Druck den Dichtring auf der gegenüberliegenden Seite zur Anlage an der Innenwand der Aufnahmenut bringt, so daß dadurch die ausreichende Abdichtung erzielt wird.

Um die Abdichtwirkung zu erhöhen, wird gemäß der Erfindung vorgeschlagen, daß die lichte Weite der Aufnahmenutsich in radialer Richtung vom Eintritt zum Ende hin verjüngt, während aber der Dichtring selbst gleichbleibende Stärke aufweist, wobei die Stärke etwa so ist, wie die Weite der Aufnahmenut an ihrer größten Stelle. Hierdurch wird erreicht, daß beim Zusammenschrauben der beiden Armaturteile ein festes Einpressen des Dichtringes in die Aufnahmenut erfolgt.

Vorteilhafterweise können mehrere Dichtringe übereinander im Bereich der Anschlußflächen vorgesehen werden. Schließlich kann zusätzlich zu der Anordnung der Dichtringe wenigstens eine Kunststoffschicht der Flanschfläche als kammprofilierte Dichtung ausgebildet sein.

Ausführungsbeispiele der Erfindung werden nachfolgend anhand der Zeichnungen erläutert:

Die Zeichnungen zeigen dabei in
- Fig. 1: eine Schnittdarstellung eines Kugelhahns, in
- Fig. 2: in größerem Maßstab eine erste Ausführungsform der Auskleidung im Bereich der Flanschflächen, wobei die beiden Flanschflächen noch nicht dicht aufeinandergezogen sind, in
- Fig. 3: eine abgeänderte Ausführungsform der Abdichtung im Bereich der Flanschflächen, wobei nunmehr aber die beiden Flanschflächen dicht aufeinandergezogen sind und schließlich in
- Fig. 4: eine Darstellung der Dichtnut, wobei sich die Dichtnut vom Anfang zum Ende hin verjüngt.

In den Zeichnungen ist mit 1 ein Gehäuse eines Absperrorganes bezeichnet, wobei innerhalb des Gehäuses ein Stellglied 2 vorgesehen ist, das als Kugelhahn ausgebildet ist und das über einen Handhebel 4 unter Zwischenschaltung einer Stellwelle 3 betätigt werden kann. Das Gehäuse 1 wird durch einen Anschlußstutzen 5 verschlossen, der über Befestigungsmittel 7 an dem Gehäuse 1 festlegbar ist. Hierbei liegt der Anschlußstutzen 5 mit Flanschflächen 9 an Flanschflächen 8 des Gehäuses 1 an.

Die Zeichnung zeigt weiterhin, daß zur Führung aggresiver Medien das Innere des Gehäuses die Außenseite des Kugelhahnes und das Innere des Anschlußstutzens 5 mit einer Auskleidung aus Kunststoff versehen ist.

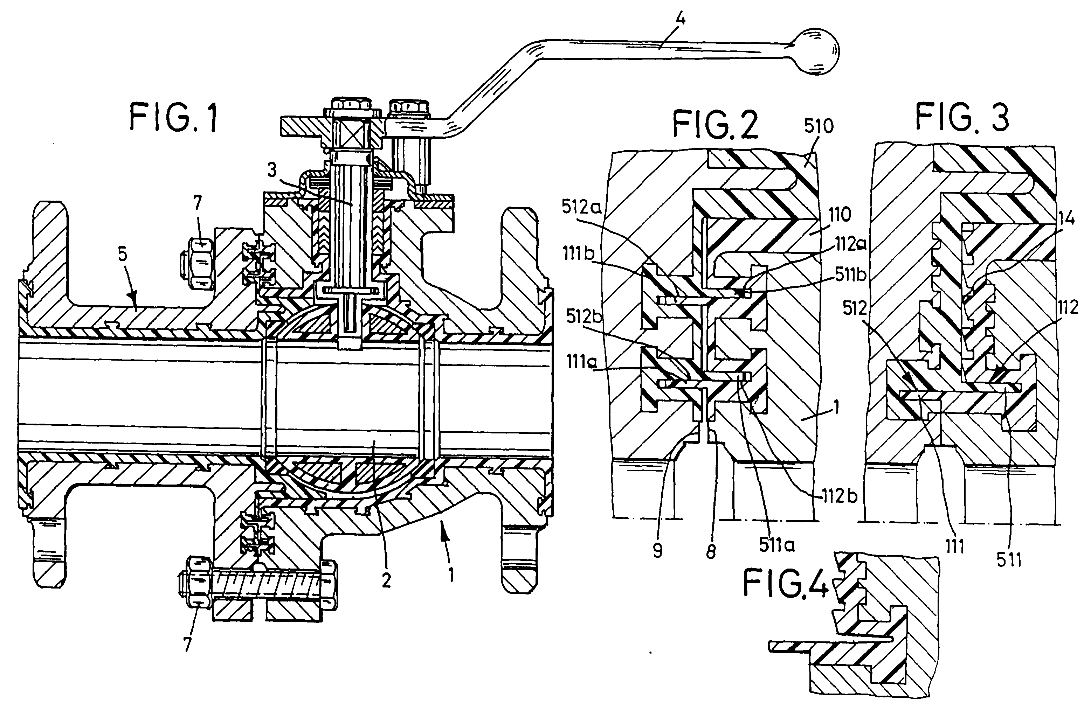

Fig. 2 zeigt eine erste Ausführungsform der Abdichtung der beiden miteinander in Kontakt kommenden Auskleidungsschichten 110 und 510 bezüglich der Flanschflächen 8 und 9, und es ist erkennbar, daß z.B. die Auskleidungsschicht 510 vorspringende fingerartige Dichtringe 511a und 511b aufweist, die in entsprechende Aufnahmenuten 112a und 112b bzw. 512a und 512b eingreifen können.

Bei der Darstellung in Fig. 4 sind die beiden miteinander zu verbindenden Flanschflächen 8 und 9 noch nicht durch das Befestigungsmittel 7 fest aufeinanderzugezogen, so daß in der Zeichnung noch ein kleiner Spalt zu sehen ist.

Werden die beiden Flanschflächen fest aufeinanderzugezogen, dringen die entsprechenden Dichtringe 511a und 511b bzw. 111a und 111b tief und fest in die zugeordneten Aufnahmenuten 112a und 112b bzw. 512a und 512b ein, so daß dadurch die gewünschte Abdichtung erreicht wird.

Hierbei ist erkennbar, daß dann, wenn eine Leckage auftritt, diese im Bereich der Dichtringe auf die Dichtringe so aufdrückt, daß die Dichtringe mit ihrer genüberliegenden Seite fest auf die entsprechende Innenseite der Aufnahmenut aufgepreßt werden.

Bei der Ausführungsform gemäß Fig. 4 ist erkennbar, daß die Aufnahmenut sich zum Nutjüngsten hin im Querschnitt verringert, so daß damit eine zusätzliche Abdichtung erreicht wird.

Bei der Ausführungsform gemäß Fig. 3 ist nur jeweils ein Dichtring 511 bzw. 111 vorgesehen und zusätzlich eine Fläche der Auskleidung im Bereich der Flanschfläche 8 oder der Flanschfläche 9 mit einer kammprofilierten Dichtung 14 ausgerüstet.

## Patentansprüche

1. Absperrorgan, insbesondere Kugelhahn, mit einem in einem Gehäuse (1) angeordneten Stellglied (2), wobei das Gehäuse (1) mit einer Flanschfläche (8) ausgerüstet ist, die an einer Flanschfläche (9) eines Anschlußstutzens (5) anschließbar ist, dessen Innenraum und dessen Flanschfläche (9) ebenso wie der Innenraum und die Flanschfläche (8) des Gehäuses (1) mit einer Auskleidung aus Kunststoff od. dgl. versehen sind, wobei die Auskleidungen bei an dem Gehäuse (1) angeschlossenem Anschlußstutzen (5) dichtend aufeinanderliegen und die aneinander zur Anlage kommenden Auskleidungen (110 und 510) der Flanschflächen (8 und 9) je mit wenigstens einem auf die gegenüberliegende Flanschfläche vorstehenden, materialeinheitlich aus der Auskleidung (110, 510) ausgebildeten Dichtring (111 bzw. 511) ausgerüstet sind, dadurch gekennzeichnet, daß die Dichtringe in in den Auskleidungen (110 und 510) der gegenüberliegenden Flanschflächen (8 und 9) ausgeformten Aufnahmenuten (112 bzw. 512) im angeschlossenen Zustand von Anschlußstutzen (5) und Gehäuse (1) eingreifen, wobei jeder Dichtring (111 bzw. 511) gleichbleibende Stärke aufweist, aber der freie Querschnitt jeder Aufnahmenut (512 und/oder 112) sich zum Nuttiefsten hin verjüngt.

2. Absperrorgan nach Anspruch 1, dadurch gekennzeichnet, daß die Dichtringe (511 und 111) eine größere Länge als die Stärke der Auskleidung im übrigen Bereich der Flanschflächen (8, 9) aufweisen.

3. Absperrorgan nach Anspruch 1 oder 2, dadurch gekennzeichnet, daß die Auskleidungen jeder Flanschfläche (8, 9) mehrere Dichtringe (511a, 511b; 111a, 111b) aufweisen.

4. Absperrorgan nach einem der vorhergehenden Ansprüche, dadurch gekennzeichnet, daß eine der beiden Auskleidungen (510 bzw. 110) der Flanschflächen (8 oder 9) als kammprofilierte Dichtung (14) ausgebildet ist.

5. Absperrorgan nach einem der vorhergehenden Ansprüche, dadurch gekennzeichnet, daß die Stärke eines Dichtringes (511, 111) dem größten freien Querschnitt der zugeordneten Aufnahmenut (512, 112) entspricht.

## Claims

1. A shut-off device, especially a ball valve, comprising a control element (2) arranged in a housing (1), the housing (1) being provided with a flange face (8) which may be attached to a flange face (9) of a connecting branch (5), the inside and flange face (9) of which, as well as the inside and flange face (8) of the housing (1) are provided with a lining of plastics material or the like, the linings lying sealingly against each other when the connecting branch (5) is attached to the housing (1) and the mutually adjacent linings (110 and 510) of the flange faces (8 and 9) each being provided with at least one sealing ring (111 and 511 respectively) projecting towards the opposing flange face and being formed of the material of the lining (110, 510), characterised in that the sealing rings engage in receiving grooves (112, 512) formed in the linings (110 and 510 respectively) of the opposing flange faces (8 and 9) when the connecting branch (5) and the housing (1) are in the closed state, each sealing ring (111 and 511) being of uniform thickness while the free cross section of each receiving groove (512 and/or 112) tapers towards the deepest point of the groove.

2. A shut-off device according to claim 1, characterised in that the sealing rings (511 and 111) are longer than the thickness of the lining in the remaining area of the flange faces (8, 9).

3. A shut-off device according to claim 1 or claim 2, characterised in that the linings of each flange face (8, 9) comprise a plurality of sealing rings (511a, 511b; 111a, 111b).

4. A shut-off device according to any one of the preceding claims, characterised in that one of the two linings (510 and 110 respectively) of the flange faces (8 or 9) is constructed as a grooved seal (14).

5. A shut-off device according to any one of the preceding claims, characterised in that the thickness of a sealing ring (511, 111) corresponds to the largest free cross section of the associated receiving groove (512, 112).

## Revendications

1. Organe d'isolement, en particulier robinet à boisseau sphérique, comportant un organe de réglage (2) disposé dans un carter (1), le carter (1) étant équipé d'une surface de bride (8) pouvant être raccordée à une surface de bride (9) d'une tubulure de raccordement (5), dont l'espace intérieur et dont la surface de bride (9) sont également pourvus, comme l'espace intérieur et la surface de bride (8) du carter (1), d'un revêtement en matière plastique ou analogue, les revêtements des brides de raccordement (5) Raccordées au carter (1) étant placés en appui les uns sur les autres avec effet d'étanchéité et les revêtements (110 et 510), venant en appui les uns sur les autres, des surfaces de bride (8 et 9) étant chacun équipés d'au moins une bague d'étanchéité (111, respectivement 511) faisant saillie sur la surface de bride placée en regard, réalisée du même matériau que le revêtement (110, 510), caractérisé en ce que les bagues d'étanchéité s'engagent dans des gorges de logement (112, respectivement 512) creusées dans les revêtements (110 et 510) des surfaces de bride (8 et 9) placées en regard les unes des autres, à l'état raccordé des brides de raccordement (5) et du carter (1), chaque bague d'étanchéité (111, respectivement 511) présentant une épaisseur constante, mais la section libre de chaque gorge de logement (512 et/ou 112) allant en s'effilant en direction du point le plus profond de la gorge.

2. Organe d'isolement selon la revendication 1, caractérisé en ce que les bagues d'étanchéité (511 et 111) ont une longueur supérieure à l'épaisseur du revêtement dans le reste de la zone des surfaces de bride (8, 9).

3. Organe d'isolement selon la revendication 1 ou 2, caractérisé en ce que les revêtements de chaque surface de bride (8, 9) présentent plusieurs bagues d'étanchéité (511a, 511b, 111a, 111b).

4. Organe d'isolement selon l'une des revendications précédentes, caractérisé en ce que l'un des deux revêtements (510, respectivement 110) des surfaces de bride (8 ou 9) est réalisé sous forme de joint d'étanchéité (14) à profil en peigne.

5. Organe d'isolement selon l'une des revendications précédentes, caractérisé en ce que l'épaisseur d'une bague d'étanchéité (511, 111) correspond à la plus grande section transversale libre de la gorge de logement (512, 112) associée.
